# EUROPÄISCHE PATENTSCHRIFT

(11) **EP 1 844 228 B1**
(45) Veröffentlichungstag und Bekanntmachung des Hinweises auf die Patenterteilung: **07.05.2008**
(21) Anmeldenummer: 05847515.3
(22) Anmeldetag: 29.12.2005
(51) Int. Cl.: F02D 41/34, F02D 41/40, F02D 41/20, F02M 61/16, F02D 41/30

(54) **VERFAHREN UND VORRICHTUNG ZUM STEUERN EINER BRENNKRAFTMASCHINE**
METHOD AND DEVICE FOR CONTROLLING AN INTERNAL COMBUSTION ENGINE
PROCEDE ET DISPOSITIF PERMETTANT DE COMMANDER UN MOTEUR A COMBUSTION INTERNE

(30) Priorität: 31.01.2005 DE 102005004442
(43) Veröffentlichungstag der Anmeldung: 17.10.2007
(73) Patentinhaber: SIEMENS AKTIENGESELLSCHAFT, 80333 München (DE)
(72) Erfinder: ZHANG, Hong, 93105 Tegernheim (DE)
(86) Internationale Anmeldenummer: PCT/EP2005/057207
(87) Internationale Veröffentlichungsnummer: WO 2006/081905

(56) Entgegenhaltungen:
- WO-A-03/031787
- US-B1- 6 679 222

## Beschreibung

Die Erfindung betrifft ein Verfahren und eine Vorrichtung zum Steuern einer Brennkraftmaschine. Immer strengere gesetzliche Vorschriften bezüglich zulässiger Schadstoffemissionen von Kraftfahrzeugen, in denen Brennkraftmaschinen angeordnet sind, machen es erforderlich, die Schadstoffemissionen beim Betrieb der Brennkraftmaschine so gering wie möglich zu halten. Dies kann zum einen erfolgen, in dem die Schadstoffemissionen verringert werden, die während der Verbrennung des Luft/Kraftstoff-Gemisches in dem jeweiligen Zylinder der Brennkraftmaschine entstehen. Zum anderen sind in Brennkraftmaschinen Abgasnachbehandlungssysteme im Einsatz, die die Schadstoffemissionen, die während des Verbrennungsprozesses des Luft/Kraftstoff-Gemisches in den jeweiligen Zylindern erzeugt werden, in unschädliche Stoffe umwandeln.

Insbesondere das Vermeiden des Ausstoßens von Rußpartikeln stellt eine große Herausforderung dar, der beispielsweise durch das Vorsehen eines geeigneten Rußpartikelfilters begegnet werden kann, der jedoch sehr teuer ist.

Im Zusammenhang mit Brennkraftmaschinen, bei denen die Einspritzventile so angeordnet sind, dass sie den Kraftstoff direkt in die jeweiligen Brennräume der Zylinder zumessen, ist es vorteilhaft diese möglichst in einem Schichtbetrieb zu betreiben, in dem das Luft/Kraftstoff-Gemisch in einem vorgegebenen Bereich geschichtet ist in dem Brennraum und die übrigen Bereiche nur einen sehr geringen Kraftstoffanteil aufweisen. Auf diese Weise lässt sich insbesondere in einem Teillastbetrieb der Brennkraftmaschine ein sehr hoher Wirkungsgrad erreichen. Aufgrund der in diesem Schichtbetrieb entstehenden Stickoxidemissionen ist bei derartigen Brennkraftmaschinen regelmäßig ein NOx-Katalysator vorgesehen, der regelmäßig wieder regeneriert werden muss, was durch Einnahme eines Homogenbetriebs mit einem angefettetem Luft/Kraftstoff-Verhältnis in den Brennraum des Zylinders unterstützt wird. Bei dem Homogenbetrieb ist das Luft/Kraftstoff-Gemisch möglichst homogen über den gesamten Brennraum des Zylinders verteilt.

Die Aufgabe der Erfindung ist es, ein Verfahren und eine Vorrichtung zu schaffen, die bzw. das einfach einen emissionsarmen Betrieb der Brennkraftmaschine ermöglicht.

Die Aufgabe wird gelöst durch die Merkmale der unabhängigen Patentansprüche. Vorteilhafte Ausgestaltungen der Erfindung sind in den Unteransprüchen gekennzeichnet.

Die Erfindung zeichnet sich aus durch ein Verfahren und eine entsprechende Vorrichtung zum Steuern einer Brennkraftmaschine mit einem Einspritzventil, mittels dessen Kraftstoff direkt in einen Brennraum eines Zylinders zugemessen werden kann. Das Einspritzventil weist eine Düsennadel auf, deren Hub für einen jeweiligen Einspritzvorgang variabel einstellbar ist. In einem Homogenbetrieb der Brennkraftmaschine mit beabsichtigter homogener Verteilung des Kraftstoffs in dem jeweiligen Brennraum wird ein Sollwert des Kraftstoffdrucks vorgegeben, mit dem das Einspritzventil beaufschlagt wird. Einen Sollwert des Hubs der Düsennadel wird ein vorgegebener Minimalhub zugeordnet. Ein Sollwert einer zuzumessenden Kraftstoffmasse wird über eine Variation eines Sollwertes einer Einspritzzeitdauer eingestellt, falls der Sollwert der Einspritzzeitdauer kleiner oder gleich ist einem vorgegebenen Maximalzeitdauerwert. Ansonsten wird der Sollwert des Hubs der Düsennadel solange variiert, bis der Sollwert der Einspritzzeitdauer kleiner oder gleich ist dem vorgegebenen Maximalzeitdauerwert. Dann wird der Sollwert des Hubs der Einspritzzeitdauer entsprechend tatsächlich eingestellt. Der Sollwert des Kraftstoffdrucks kann so geeignet groß gewählt werden im Sinne einer sehr guten, also sehr feinen, Zerstäubung des Kraftstoffs in dem Brennraum mit der Folge einer sehr guten Gemischaufbereitung und einem verringern der Wahrscheinlichkeit des Auftretens von Rußpartikeln. Rußpartikel entstehen besonders dann, wenn das Luft/Kraftstoff-Gemisch in dem jeweiligen Brennraum des Zylinders lokal einen Lambdawert von kleiner 0,7 hat und die Verbrennungstemperatur im Bereich von 1600° Kelvin bis 2100° Kelvin liegt. Der möglichst geringe Hub der Düsennadel des Einspritzventils trägt ferner bei zu einer sehr guten Zerstäubung des Kraftstoffs in dem Brennraum und somit einer sehr homogenen Verteilung damit einhergehend einer Verringerung von Rußpartikeln nach der Verbrennung.

Gemäß einer vorteilhaften Ausgestaltung der Erfindung wird der Hub der Düsennadel stufenweise variiert. Dies hat den Vorteil, dass so die Ansteuerung des Einspritzventils besonders einfach ausgestaltet werden kann.

Gemäß einer weiteren vorteilhaften Ausgestaltung der Erfindung wird der Maximalzeitdauerwert abhängig von einer für eine Öffnungszeitdauer des Gaseinlassventils repräsentativen Größe ermittelt. Dies ermöglicht in vorgebbaren Betriebspunkten die Zerstäubung des Kraftstoffs weiter zu verbessern. In diesen Zusammenhang ist es besonders vorteilhaft, wenn die repräsentative Größe eine Drehzahl und/oder Last der Brennkraftmaschine ist.

Gemäß einer weiteren vorteilhaften Ausgestaltung der Erfindung wird der Sollwert des Kraftstoffdrucks abhängig von dem Sollwert der Kraftstoffmasse und der Drehzahl ermittelt. Auf diese Weise kann der Sollwert des Kraftstoffdrucks einfach auf einen höchstmöglichen Kraftstoffdruck hin optimiert sein.

Ausführungsbeispiele der Erfindung sind im Folgenden anhand der schematischen Zeichnungen näher erläutert.

Es zeigen:
- Figur 1: eine Brennkraftmaschine und
- Figur 2: ein Ablaufdiagramm eines Programms zum Steuern der Brennkraftmaschine.

Elemente gleicher Konstruktion oder Funktion sind figurenübergreifend mit den gleichen Bezugszeichen gekennzeichnet.

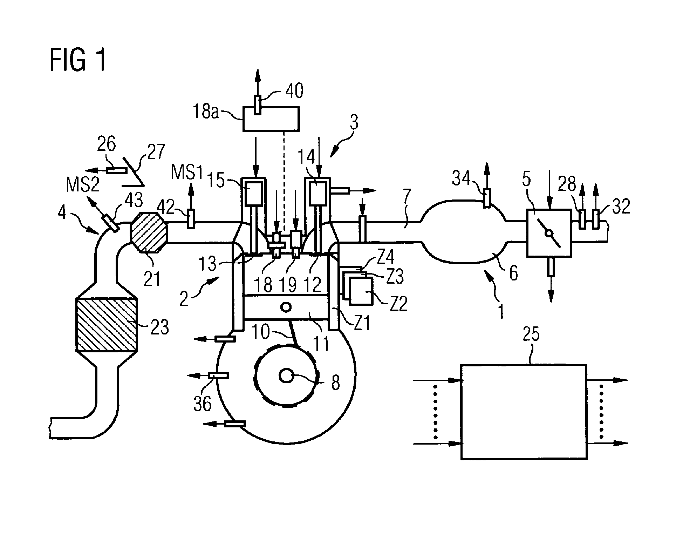

Eine Brennkraftmaschine (Figur 1) umfasst einen Ansaugtrakt 1, einen Motorblock 2, einen Zylinderkopf 3 und einen Abgastrakt 4. Der Ansaugtrakt 1 umfasst vorzugsweise eine Drosselklappe 5, ferner einen Sammler 6 und ein Saugrohr 7, das hin zu einem Zylinder Z1 über einen Einlasskanal in den Motorblock 2 geführt ist. Der Motorblock 2 umfasst ferner eine Kurbelwelle 8, welche über eine Pleuelstange 10 mit dem Kolben 11 des Zylinders Z1 gekoppelt ist.

Der Zylinderkopf 3 umfasst einen Ventiltrieb mit einem Gaseinlassventil 12 und einem Gasauslassventil 13.

Der Zylinderkopf 3 umfasst ferner ein Einspritzventil 18 und eine Zündkerze 19.

Das Einspritzventil 18 umfasst eine Düsennadel, die mittels eines Aktuators des Einspritzventils aus ihrer Schließposition heraus bewegt werden kann, in der sie eine Kraftstoffzumessung in den Brennraum des jeweiligen Zylinders Z1 unterbindet. Ein Hub der Düsennadel bezeichnet ihre jeweilige Auslenkung während eines Einspritzvorgangs heraus aus ihrer Schließposition. Im Falle einer bevorzugten nach außen öffnenden Düsennadel, wie sie regelmäßig bei Benzin-Einspritzventilen im Einsatz ist, erfolgt der Hub der Düsennadel heraus aus ihrer Schließposition in Richtung hin zu dem Brennraum des Zylinders Z1.

Der Aktuator des Einspritzventils ist so ausgebildet und mit der Düsennadel gekoppelt, dass der Hub variabel einstellbar ist. Besonders geeignet ist hierzu ein Piezo-Aktuator. Bei geeigneter konstruktiver Ausgestaltung des Einspritzventils kann der Aktuaor auch ein anderer, dem Fachmann bekannter Aktuator sein, beispielsweise ein elektromagnetischer Aktuator. Das Einspritzventil 18 ist eingangseitig hydraulisch gekoppelt mit einer Kraftstoffzuführeinrichtung 18a, über welche ihm der Kraftstoff unter hohem Druck zugeführt wird. In der Kraftstoffzuführeinrichtung 18a wird im Falle von Benzin als Kraftstoff der Kraftstoffdruck auf Werte bis etwa 200 Bar oder gegebenenfalls auch mehr eingestellt.

In dem Abgastrakt ist ein Abgaskatalysator angeordnet, der als Dreiwegekatalysator 21 ausgebildet ist. Ferner ist bevorzugt in dem Abgastrakt ein weiterer Abgaskatalysator angeordnet, der als NOX-Katalysator 23 ausgebildet ist.

Eine Steuervorrichtung 25 ist vorgesehen, der Sensoren zugeordnet sind, die verschiedene Messgrößen erfassen und jeweils den Wert der Messgröße ermitteln. Die Steuervorrichtung 25 ermittelt abhängig von mindestens einer der Messgrößen Stellgrößen, die dann in ein oder mehrere Stellsignale zum Steuern der Stellglieder mittels entsprechender Stellantriebe umgesetzt werden. Die Steuervorrichtung 25 kann auch als Vorrichtung zum Steuern der Brennkraftmaschine bezeichnet werden.

Die Sensoren sind ein Pedalstellungsgeber 26, welcher eine Fahrpedalstellung eines Fahrpedals 27 erfasst, ein Luftmassensensor 28, welcher einen Luftmassenstrom stromaufwärts der Drosselklappe 5 erfasst, ein erster Temperatursensor 32, welcher eine Ansauglufttemperatur erfasst, ein Saugrohrdrucksensor 34, welcher einen Saugrohrdruck in dem Sammler 6 erfasst, ein Kurbelwellenwinkelsensor 36, welcher einen Kurbelwellenwinkel erfasst, dem dann eine Drehzahl N zugeordnet wird.

Ferner ist eine erste Abgassonde 42 vorgesehen, die stromaufwärts des Dreiwegekatalysators 21 angeordnet ist und die einen Restsauerstoffgehalt des Abgases erfasst und deren Messsignal charakteristisch ist für das Luft/Kraftstoff-Verhältnis in dem Brennraum des Zylinders Z1 und stromaufwärts ersten Abgassonde vor der Oxidation des Kraftstoffs. Ferner ist eine zweite Abgassonde 43 vorgesehen, die stromabwärts des Dreiwegekatalysators 21 angeordnet ist und die einen Restsauerstoffgehalt des Abgases erfasst und deren Messsignal charakteristisch ist für das Luft/Kraftstoff-Verhältnis in dem Brennraum des Zylinders Z1 und stromaufwärts der zweiten Abgassonde 43 vor der Oxidation des Kraftstoffs.

Ferner ist ein Kraftstoffdrucksensor 40 vorgesehen, der einen Kraftstoffdruck in der Kraftstoffzuführeinrichtung, insbesondere in einem Hochdruckspeicher der Kraftstoffzuführeinrichtung, erfasst.

Je nach Ausführungsform der Erfindung kann eine beliebige Untermenge der genannten Sensoren vorhanden sein oder es können auch zusätzliche Sensoren vorhanden sein.

Die Stellglieder sind beispielsweise die Drosselklappe 5, die Gaseinlass- und Gasauslassventile 12, 13, das Einspritzventil 18 oder die Zündkerze 19.

Neben dem Zylinder Z1 sind bevorzugt auch noch weitere Zylinder Z2 bis Z4 vorgesehen, denen dann auch entsprechende Stellglieder und ggf. Sensoren zugeordnet sind.

Ein Programm ist in einem Programmspeicher der Steuervorrichtung 25 gespeichert und kann während des Betriebs der Brennkraftmaschine abgearbeitet werden.

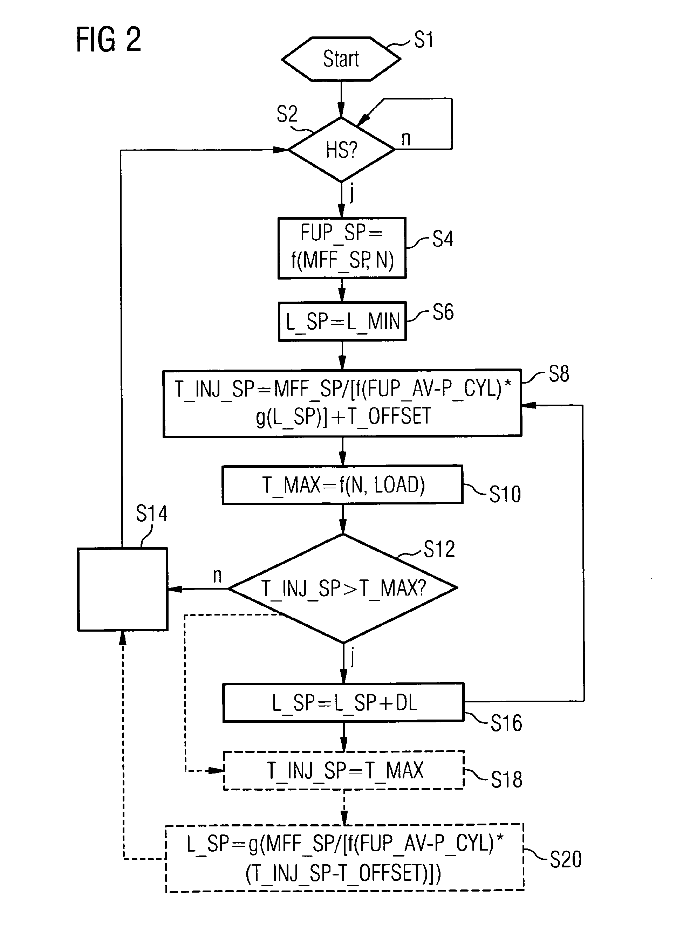

Das Programm wird in einem Schritt S1 (Figur 2) gestartet, in dem gegebenenfalls Variablen initialisiert werden.

In einem Schritt S2 wird geprüft, ob gerade ein Homogenbetrieb HS der Brennkraftmaschine vorliegt. Ist dies nicht der Fall, so wird die Bedingung des Schrittes S2 bevorzugt nach einer vorgegebenen Wartezeitdauer oder nach Ablauf eines vorgebbaren Kurbelwellenwinkels erneut geprüft.

Ist die Bedingung des Schrittes S2 hingegen erfüllt, so wird in einem Schritt S4 ein Sollwert FUP_SP des Kraftstoffdrucks abhängig von der Drehzahl N und einem Sollwert MFF_SP einer zuzumessenden Kraftstoffmasse ermittelt. Der Sollwert der zuzumessenden Kraftstoffmasse wird mittels geeigneter Funktionen der Brennkraftmaschine abhängig von dem durch die Brennkraftmaschine zu erzeugenden Drehmoment ermittelt. Dieses wird wiederum bevorzugt abhängig mittels eines Drehmomentmodells ermittelt, bei dem ein Solldrehmoment abhängig von dem Pedalwert des Pedalstellungsgebers und weiteren Messgrößen der Brennkraftmaschine und gegebenenfalls unter Berücksichtigung von Drehmomentanforderungen weiterer Funktionen oder Aggregate der Brennkraftmaschine oder des Fahrzeugs ermittelt wird. Besonders bevorzugt wird abhängig von dem zu erzeugenden Drehmoment ein in die Zylinder zuzuführender Soll-Luftmassenstrom ermittelt und eingestellt und die zuzumessenden Kraftstoffmasse MFF_SP abhängig von einem tatsächlichen Luftmassenstrom in die jeweiligen Zylinder Z1 bis Z4 und dem einzustellenden Luft/Kraftstoff-Verhältnis ermittelt.

In einer einfachen Ausgestaltung des Programms kann der Sollwert FUP_SP des Kraftstoffdrucks auch fest vorgegeben sein.

In einem Schritt S6 wird einem Sollwert L_SP des Hubs der Düsennadel ein Minimalhubwert L_MIN zugeordnet. Der Minimalhubwert L_MIN ist geeignet so vorgegeben, dass er mittels des Aktuators des Einspritzventils mit der gewünschten Präzision ansteuerbar ist und somit eine ausreichend präzise Zumessung von Kraftstoff bei dem Minimalhubwert L_MIN möglich ist.

In einem Schritt S8 wird anschließend ein Sollwert T_INJ_SP der Einspritzzeitdauer ermittelt und zwar abhängig von dem Sollwert MFF_SP der zuzumessenden Kraftstoffmasse, dem mittels des Kraftstoffdrucksensors 40 erfassten Istwertes FUP_AV des Kraftstoffdrucks, einem Zylinderdruck P_CYL während des Zumessens des Kraftstoffs in den Brennraum des Zylinders, dem Sollwert L_SP des Hubs der Düsennadel und eines Zeitoffsetwertes T_OFFSET, der das Steuerverhalten des Einspritzventils 18 berücksichtigt und bevorzugt vorgegeben ist. Der Zylinderdruck P_CYL während des Zumessens des Kraftstoffs kann mittels eines geeigneten Zylinderdrucksensors erfasst werden. Bevorzugt wird er jedoch mittels eines physikalischen Modells abhängig von weiteren Messgrößen, wie beispielsweise dem Saugrohrdruck und der Drehzahl, ermittelt. Das Ermitteln des Sollwertes T_INJ_SP der Einspritzzeitdauer erfolgt in dem Schritt S8 bevorzugt mittels der dort angegebenen Formel, wobei f, g hier für Funktionen oder auch Kennfeldinterpolationen stehen.

In einem Schritt S10 wird ein Maximalzeitdauerwert T_MAX ermittelt. Der Maximalzeitdauerwert ist abhängig von einer Öffnungszeitdauer des Gaseinlassventils 12. Dies ist darauf zurückzuführen, dass während des homogenen Betriebs HS der Kraftstoff so frühzeitig in den jeweiligen Brennraum des Zylinders Z1 bis Z4 zugemessen werden muss, dass eine geeignete Homogenisierung des Luft/Kraftstoff-Gemisches in dem Brennraum stattfinden kann. Der Maximalzeitdauerwert T_MAX wird in dem Schritt S10 abhängig von einer für die Öffnungszeitdauer des Gaseinlassventils 12 repräsentativen Größe ermittelt. Dies erfolgt beispielsweise abhängig von der Drehzahl N und/oder der Last LOAD der Brennkraftmaschine. Die Last kann beispielsweise repräsentiert sein durch den Saugrohrdruck oder auch den Luftmassenstrom.

In einem Schritt S12 wird anschließend geprüft, ob der Sollwert T_INJ_SP der Einspritzzeitdauer größer ist als der Maximalzeitdauerwert T_MAX. Ist dies nicht der Fall, so wird in einem Schritt S14 das Einspritzventil 18 entsprechend dem Sollwert T_INJ_SP der Einspritzzeitdauer und dem Sollwert L_SP des Hubs der Düsennadel angesteuert zum Zumessen des Kraftstoffs.

Ist die Bedingung des Schrittes S12 hingegen erfüllt, so wird in einem Schritt S16 der Sollwert L_SP des Hubs der Düsennadel um einen Inkrementierungswert DL erhöht und anschließend die Bearbeitung in dem Schritt S8 fortgesetzt. Der Inkrementierungswert ist dabei je nach Einspritzventil 18 geeignet ausgebildet im Sinne eines stufenweisen Variierens des Hubs.

Durch das Programm gemäß der Figur 2 kann einfach gewährleistet werden, dass der Kraftstoffdruck auch im Homogenbetrieb HS der Brennkraftmaschine auf einem sehr hohen Wert eingestellt werden kann und somit eine sehr gute Zerstäubung des Kraftstoffs gewährleistet werden kann. Darüber hinaus wird je nach der einzuspritzenden Kraftstoffmasse der Sollwert L_SP des Hubs der Düsennadel möglichst gering eingestellt. Auch dies trägt zu einer guten Zerstäubung des Kraftstoffs bei.

Alternativ zu dem Schritt S16 kann ein Schritt S18 vorgesehen sein, der ausgeführt wird, wenn die Bedingung des Schrittes S12 erfüllt ist. In dem Schritt S18 wird der Sollwert T_INJ_SP mit dem Maximalzeitdauerwert T_MAX belegt. Anschließend wird in einem Schritt S20 ein Sollwert L_SP des Hubs der Düsennadel ermittelt und zwar durch entsprechende Umkehrung der Beziehung gemäß des Schrittes S8. Anschließend wird dann die Bearbeitung in dem Schritt S14 fortgesetzt.

Besonders geeignet ist die Durchführung der Schritte S4 bis S20 insbesondere dann in dem Homogenbetrieb HS, wenn eine geringe Kraftstoffmasse zuzumessen ist, da so insbesondere hier ein für die Zerstäubung nachteiliges zu starkes Absenken des Sollwertes FUP_SP des Kraftstoffdrucks verhindert werden kann. Der Homogenbetrieb HS wird in diesem Zusammenhang insbesondere durchgeführt zum Regenerieren des NOX-Katalysators 23. Der Druck kann so bei der Durchführung der Schritte S4 bis S20 im Homogenbetrieb gegebenenfalls bis annähernd so hoch eingestellt werden, wie in dem Schichtbetrieb der Brennkraftmaschine.

## Patentansprüche

1. Verfahren zum Steuern einer Brennkraftmaschine mit einem Einspritzventil (18), mittels dessen Kraftstoff direkt in einen Brennraum eines Zylinders (Z1 bis Z4) zugemessen werden kann und das eine Düsennadel hat, deren Hub für einen jeweiligen Einspritzvorgang variabel einstellbar ist, bei dem in einem Homogenbetrieb (HS) der Brennkraftmaschine mit beabsichtigter homogener Verteilung des Kraftstoffs in dem Brennraum
- ein Sollwert (FUP_SP) des Kraftstoffdrucks vorgegeben wird,
- einem Sollwert (L_SP) des Hubs der Düsennadel ein vorgegebener Minimalhubwert (L_MIN) zugeordnet wird und
- ein Sollwert (MFF_SP) einer zuzumessenden Kraftstoffmasse über eine Variation eines Sollwertes (T_INJ_SP) einer Einspritzzeitdauer eingestellt wird, falls der Sollwert (T_INJ_SP) der Einspritzzeitdauer kleiner oder gleich ist einem vorgegebenen Maximalzeitdauerwert (T_MAX), und
- ansonsten der Sollwert (L_SP) des Hubs der Düsennadel so lange variiert wird, bis der Sollwert (T_INJ_SP) der Einspritzzeitdauer kleiner oder gleich ist dem vorgegebenen Maximalzeitdauerwert (T_MAX), und dann der Sollwert (L_SP) des Hubs und der Einspritzzeitdauer (T_INJ_SP) entsprechend eingestellt werden.

2. Verfahren nach Anspruch 1, bei dem der Hub der Düsennadel stufenweise variiert wird.

3. Verfahren nach einem der vorstehenden Ansprüche, bei dem der Maximalzeitdauerwert (T_MAX) abhängig von einer für eine Öffnungszeitdauer eines Gaseinlassventils (12) repräsentativen Größe ermittelt wird.

4. Verfahren nach Anspruch 3, bei dem die Größe eine Drehzahl (N) und/oder Last (LOAD) der Brennkraftmaschine ist.

5. Verfahren nach einem der vorstehenden Ansprüche, bei dem der Sollwert (FUP_SP) des Kraftstoffdrucks abhängig von dem Sollwert (MFF_SP) der Kraftstoffmasse und der Drehzahl (N) ermittelt wird.

6. Vorrichtung zum Steuern einer Brennkraftmaschine mit einem Einspritzventil (18), mittels dessen Kraftstoff direkt in einen Brennraum eines Zylinders (Z1 bis Z4) zugemessen werden kann und das eine Düsennadel hat, deren Hub für einen jeweiligen Einspritzvorgang variabel einstellbar ist, wobei die Vorrichtung ausgebildet ist in einem Homogenbetrieb (HS) der Brennkraftmaschine mit beabsichtigter homogener Verteilung des Kraftstoffs in dem Brennraum zum
- vorgeben eines Sollwertes (FUP_SP) des Kraftstoffdrucks,
- Zuordnen eines vorgegebenen Minimalhubwertes (L_MIN) zu einem Sollwert (L_SP) des Hubs der Düsennadel und
- Einstellen eines Sollwertes (MFF_SP) einer zuzumessenden Kraftstoffmasse über eine Variation eines Sollwertes (T_INJ_SP) einer Einspritzzeitdauer, falls der Sollwert (T_INJ_SP) der Einspritzzeitdauer kleiner oder gleich ist einem vorgegebenen Maximalzeitdauerwert (T_MAX), und
- ansonsten Variieren des Sollwertes (L_SP) des Hubs der Düsennadel so lange, bis der Sollwert (T_INJ_SP) der Einspritzzeitdauer kleiner oder gleich ist dem vorgegebenen Maximalzeitdauerwert (T_MAX), und dann entsprechendes Einstellen des Sollwertes (L_SP) des Hubs und der Einspritzzeitdauer (T_INJ_SP) .

## Claims

1. Method for controlling an internal combustion engine with an injection valve (18), by means of which fuel can be metered directly into a combustion chamber of a cylinder (Z1 to Z4) and which has an injection needle whose stroke can be variably set for a given injection process, in which during homogenous operation (HS) of the internal combustion engine with a desired homogenous distribution of the fuel in the combustion chamber
- a desired value (FUP_SP) is predefined for the fuel pressure,
- a predefined minimum stroke value (L_MIN) is assigned to a desired value (L_SP) for the stroke of the injection needle and
- a desired value (MFF_SP) for a fuel mass to be metered is set by way of a variation in a desired value (T_INJ_SP) for an injection duration if the desired value (T_INJ_SP) for the injection duration is less than or equal to a predefined maximum duration value (T_MAX), and
- otherwise the desired value (L_SP) for the stroke of the injection needle is varied until such time as the desired value (T_INJ_SP) for the injection duration is less than or equal to the predefined maximum duration value (T_MAX), and the desired value (L_SP) for the stroke and for the injection duration (T_INJ_SP) is then set accordingly.

2. Method according to claim 1, in which the stroke of the injection needle is varied in progressive stages.

3. Method according to one of the preceding claims, in which the maximum duration value (T_MAX) is determined depending on a variable which is representative of an opening duration of a gas inlet valve (12).

4. Method according to claim 3, in which the variable is a rotational speed (N) and/or load (LOAD) of the internal combustion engine.

5. Method according to one of the preceding claims, in which the desired value (FUP_SP) for the fuel pressure is determined depending on the desired value (MFF_SP) for the fuel mass and the rotational speed (N).

6. Device for controlling an internal combustion engine with an injection valve (18), by means of which fuel can be metered directly into a combustion chamber of a cylinder (Z1 to Z4) and which has an injection needle whose stroke can be variably set for a given injection process, whereby during homogenous operation (HS) of the internal combustion engine with a desired homogenous distribution of the fuel in the combustion chamber the device is designed to
- predefine a desired value (FUP_SP) for the fuel pressure,
- assign a predefined minimum stroke value (L_MIN) to a desired value (L_SP) for the stroke of the injection needle and
- set a desired value (MFF_SP) for a fuel mass to be metered by way of a variation in a desired value (T_INJ_SP) for an injection duration if the desired value (T_INJ_SP) for the injection duration is less than or equal to a predefined maximum duration value (T_MAX), and
- otherwise vary the desired value (L_SP) for the stroke of the injection needle until such time as the desired value (T_INJ_SP) for the injection duration is less than or equal to the predefined maximum duration value (T_MAX), and then accordingly set the desired value (L_SP) for the stroke and the injection duration (T_INJ_SP).

## Revendications

1. Procédé pour la commande d'un moteur à combustion interne avec une soupape d'injection (18), au moyen de laquelle du carburant peut être directement dosé dans une chambre de combustion d'un cylindre (Z1 à Z4) et qui comporte une aiguille d'injecteur dont la course est variable et réglable pour un processus d'injection correspondant, dans lequel, pendant un mode de fonctionnement homogène (HS) du moteur à combustion interne avec une distribution homogène souhaitée du carburant dans la chambre de combustion
- une valeur de consigne (FUP_SP) de la pression du carburant est définie,
- une valeur de course minimale (L_MIN) définie est associée à une valeur de consigne (L_SP) pour la course de l'aiguille d'injecteur, et
- une valeur de consigne (MFF_SP) d'une masse de carburant à doser est réglée par variation d'une valeur de consigne (T_INJ_SP) d'une durée d'injection si la valeur de consigne (T_INJ_SP) de la durée d'injection est inférieure ou égale à une valeur de durée maximale (T_MAX) définie, et
- sinon la valeur de consigne (L_SP) de la course de l'aiguille d'injecteur est variée jusqu'à ce que la valeur de consigne (T_INJ_SP) de la durée d'injection devienne inférieure ou égale à la valeur de durée maximale (T_MAX) définie, la valeur de consigne (L_SP) de la course et celle de la durée d'injection (T_INJ_SP) étant ensuite réglées en conséquence.

2. Procédé selon la revendication 1, dans lequel la course de l'aiguille d'injecteur est graduellement variée.

3. Procédé selon l'une des revendications précédentes, dans lequel la valeur de durée maximale (T_MAX) est déterminée en fonction d'une grandeur représentative d'une durée d'ouverture d'une soupape d'admission des gaz (12).

4. Procédé selon la revendication 3, dans lequel la grandeur est une vitesse de rotation (N) et/ou une charge (LOAD) du moteur à combustion interne.

5. Procédé selon l'une des revendications précédentes, dans lequel la valeur de consigne (FUP_SP) de la pression du carburant est déterminée en fonction de la valeur de consigne (MFF_SP) de la masse du carburant et de la vitesse de rotation (N).

6. Dispositif pour la commande d'un moteur à combustion interne avec une soupape d'injection (18), au moyen de laquelle du carburant peut être directement dosé dans une chambre de combustion d'un cylindre (Z1 à Z4) et qui comporte une aiguille d'injecteur dont la course est variable et réglable pour un processus d'injection correspondant, le dispositif étant prévu pendant un mode de fonctionnement homogène (HS) du moteur à combustion interne avec une distribution homogène souhaitée du carburant dans la chambre de combustion en vue de
- la définition d'une valeur de consigne (FUP_SP) de la pression du carburant,
- l'association d'une valeur de course minimale (L_MIN) définie à une valeur de consigne (L_SP) pour la course de l'aiguille d'injecteur, et
- le réglage d'une valeur de consigne (MFF_SP) d'une masse de carburant à doser par variation d'une valeur de consigne (T_INJ_SP) d'une durée d'injection si la valeur de consigne (T_INJ_SP) de la durée d'injection est inférieure ou égale à une valeur de durée maximale (T_MAX) définie, et
- sinon la variation de la valeur de consigne (L_SP) de la course de l'aiguille d'injecteur jusqu'à ce que la valeur de consigne (T_INJ_SP) de la durée d'injection devienne inférieure ou égale à la valeur de durée maximale (T_MAX) définie, et le réglage consécutif correspondant des valeurs de consigne de la course (L_SP) et de la durée d' injection (T_INJ_SP).
